(19) **Europäisches Patentamt**
**European Patent Office**
**Office européen des brevets**

(11) **EP 4 088 808 B1**

(12) **EUROPEAN PATENT SPECIFICATION**

(45) Date of publication and mention
of the grant of the patent:
**02.04.2025 Bulletin 2025/14**

(21) Application number: **21173247.4**

(22) Date of filing: **11.05.2021**

(51) International Patent Classification (IPC):
***B01D 61/22*** *(2006.01)*

(52) Cooperative Patent Classification (CPC):
**B01D 61/22;** B01D 2311/00; B01D 2313/701

(54) **METHOD FOR MONITORING A FILTRATION PROCESS**

VERFAHREN ZUR ÜBERWACHUNG EINES FILTRATIONSPROZESSES

PROCÉDÉ DE SURVEILLANCE D'UN PROCESSUS DE FILTRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.11.2022 Bulletin 2022/46**

(73) Proprietor: **GLOBAL LIFE SCIENCES SOLUTIONS
GERMANY GMBH
37586 Dassel (DE)**

(72) Inventors:
• **BRISKOT, Till**
**76135 Karlsruhe (DE)**
• **HILLEBRANDT, Nils**
**76133 Karlsruhe (DE)**
• **HAHN, Tobias**
**76135 Karlsruhe (DE)**
• **HUBBUCH, Jürgen**
**76327 Pfinztal (DE)**

• **HUUK, Thiemo**
**76135 Karlsruhe (DE)**

(74) Representative: **Sörby, Lennart**
**Cytiva Sweden AB
Björkgatan 30
751 84 Uppsala (SE)**

(56) References cited:
**CN-B- 105 921 017      US-A1- 2008 017 576
US-A1- 2011 035 195**

• BOWEN W.RICHARD ET AL: "Dynamic
ultrafiltration model for charged colloidal
dispersions: A Wigner-Seitz cell approach",
CHEMICAL ENGINEERING SCIENCE, 1 January
1995 (1995-01-01), Oxford, pages 1707 - 1736,
XP055845589, Retrieved from the Internet
<URL:www.sciencedirect.com> [retrieved on
20210928], DOI: 10.1016/0009-2509(95)00026-2

**Description**

A method for monitoring a filtration process is specified. Moreover, a device, a computer program, a computer-readable data carrier, and a filter system are specified.

BACKGROUND OF THE INVENTION

Biopharmaceutical active ingredients such as antibodies are produced in complex industrial bioprocesses. First, the target molecule, in the following also referred to as product, is produced in genetically modified cells. Then the product is usually purified by chromatography. After purification of the product by chromatography, a combined UFDF (ultrafiltration and diafiltration) process often represents the final production step. It allows the concentration of the product and transfer of the active pharmaceutical ingredient into the final formulation buffer.

To enable a subcutaneous administration of a drug to the patient, the biopharmaceutical industry always aims for a high product concentration at the end of, e.g., a UFDF process. This dosage form with high product concentration is beneficial to the patient but poses significant challenges for the development and operation of UFDF processes.

Due to interactions between the actual dissolved product and other dissolved excipients, a depletion of desired excipients and an accumulation of undesired excipients may occur in the solution during a UFDF process. This effect can cause that the finally obtained solution does not meet quality requirements. For an effective development and control of UFDF processes, it is therefore desirable that critical quality attributes of the solution, such as the concentration of specific excipients and/or the product, can be measured in real-time.

At this time, however, real-time quantification of quality attributes is limited to only a small number of attributes that can be measured directly using hardware sensors. These include the pH value and conductivity of solutions. The real-time determination of not directly measurable process variables, like concentrations, may be realized by a statistical evaluation of multivariate sensor signals. UV/Vis spectrometer and light scattering photometer may be used as such sensors. A disadvantage of the described methodology is, however, that the statistical evaluation is only valid within a limited process window and requires a complex set-up procedure for each product. Moreover, it only allows quantification and characterization of the product and does not include potentially critical excipients like buffer components. Since these excipients cannot be measured directly in the process, they have to be determined by means of complex offline analytics such as analytical chromatography. The term offline analytics characterizes a manual extraction of the sample to be analyzed, followed by sample preparation, measurement, and evaluation of the sample in a further laboratory. Due to the time between sampling and the availability of analytical results, a direct control and monitoring of processes is not possible based on offline measurements.

A possible real-time quantification of excipients and/or products may be done with a Fourier transform infrared spectrometer. As in the analytical technique described above, the real-time quantification is realized by a statistical evaluation of a multivariate sensor signal. The described real-time quantification requires that the excipients and/or products to be quantified can be detected in the infrared range. This requirement is not necessarily guaranteed for all substances. In addition, the evaluated signal of the sensor must have a sufficient signal-to-noise ratio, which is not always fulfilled due to the low concentration of many excipients. Since signal evaluation is performed using statistical models, the model has to be calibrated offline for each product-excipient combination and is only valid within the calibrated process range. Multivariate hardware sensors such as UV/Vis spectrometers, light scattering photometers, and Fourier transform infrared spectrometers are also rarely integrated into existing production facilities (filter systems), which complicates the implementation of the described approaches into real production facilities. US 2008/017576 A1 discloses a model-based method for in silico optimization of a filtration process based on an iterative approach.

It should be noted that the above-made statements should not be construed as being admitted prior art. They are only made to illustrate the background of the presently disclosed concepts and may not have been made available to the public yet.

DETAILED DESCRIPTION OF THE INVENTION

One object to be achieved is to provide an improved method for monitoring a filtration process. Preferably, the method allows to monitor the concentration of different solutes in a solution in real-time. Further objects to be achieved are to provide a device, a computer program, and a computer-readable data carrier configured to perform the method as well as a filter system with which the method can be performed.

These objects are achieved, inter alia, by the subject-matter of the independent claims. Advantageous embodiments and further developments are subject to the dependent claims and are also presented in the following description and the figures.

Firstly, the method for monitoring a filtration process is specified. During the filtration process, a first solution is processed by a filter system. Particularly, the first solution is filtered by using the filter system. The first solution may comprise at least one solute, i.e. one or more solutes. The first solution may be defined as a solution comprising at least one product as one solute and may therefore also be referred to as product solution. According to the invention, the product is a biopharmaceutical active ingredient. The first solution may comprise, besides the at least one product, further solutes like excipients. The excipients may be used to stabilize the product(s) in the finally obtained first solution

In the filter process, the first solution is guided to a filter module of the filter system. The filter module may comprise at least one membrane, e.g. a semipermeable membrane, which is permeable for some of the solutes of the first solution and/or the solvent of the first solution, but impermeable for the at least one product. The portion of the first solution permeating through the membrane is called the permeate. The portion of the first solution not passing through the membrane is called the retentate. The permeate may be removed from the first solution and may leave the filter system. The permeate does no longer constitute to the first solution. The retentate may remain in the filter system and may again be mixed to that portion of the first solution which has not yet been guided to the filter module. Since the retentate still comprises the at least one product, it is still part of the first solution. In the case that the whole initial first solution has been processed through the filter module, the retentate even completely replaces the initial first solution and forms the first solution. Therefore, the expressions retentate and first solution are herein used as synonyms. The retentate/first solution may then again be guided to the filter module and may again be filtered. This may be repeated several times or done continuously in order to increase the concentration of the at least one product in the first solution.

Due to the separation of the permeate not comprising the at least one product and the retentate comprising the at least one product, the composition of the first solution may change during the filtration process. Particularly, the amount of the excipients may change in the first solution. Additionally, during the filtration process, a second solution may be added or mixed to the first solution. The added portion of the second solution becomes part of the first solution. Thus, also this mixing changes the composition of the first solution.

According to at least one embodiment, the method comprises a step in which first measurement data are received. The first measurement data are indicative for at least one input process variable. The at least one input process variable may be a process variable of the filtration process measurable or measured during the filtration process with help of a measurement unit, e.g. in real-time and/or in-line. The input process variable is, e.g., extractable from the first measurement data. The at least one input process variable may be measured only once during the filtration process, e.g. at the beginning (t=0) of the filtration process, or repeatedly or continuously during the filtration process.

Here and in the following, a measurement unit may be a sensor, particularly an in-line hardware sensor of the filter system. A process variable may be a physical quantity which is characteristic for the filtration process. Receiving measurement data means, in particular, that the measurement data are received by an interface of a computer or processor.

According to at least one embodiment, the method comprises a step, in which output data are determined by executing a filtration process model and using the first measurement data. Thus, the output data are determined depending on the first measurement data and by executing the filtration process model. The filtration process model is, in particular, a model simulating the filtration process. For example, the filtration process model is a mathematical model. The filtration process model may, in particular, simulate interactions between some or all solutes in the first solution, e.g. by taking into account certain properties of the first solution. The filtration process model may be a mechanistic model and/or a first principle model. When executing the filtration process model, information of the first measurement data may be used in order to determine the output data.

According to at least one embodiment, executing the filtration process model comprises solving at least one physical equation. The at least one physical equation may describe the interaction between solutes, e.g. between all solutes, of the first solution. In particular, the physical equation may describe the interaction between the at least one dissolved product of the first solution and other solutes, like dissolved excipients in the first solution. The physical equation may be a scattering equation and/or a mean field equation. The described interaction between the solutes may be an electro-magnetic interaction.

Furthermore, the filtration process model may be chosen to take into account mass balance of the at least one product on the retentate side and/or electroneutrality condition on the retentate side and/or electroneutrality condition on the permeate side and/or electroneutrality condition in the second solution and/or thermodynamic equilibrium between the permeate and the retentate. According to the invention, executing the filtration process model comprises solving at least one physical equation describing the interaction between solutes of the first solution, the physical equation takes into account the mass balance, the electroneutrality condition and thermodynamic equilibrium of the filtration process.

According to at least one embodiment, at least one parameter of the filtration process model, e.g. of the at least one physical equation, is dependent on the at least one input process variable derived from the first measurement data. In other words, for executing the model, the input process variable extracted from the first measurement data may be used in order to determine the at least one parameter of the filtration process model.

According to at least one embodiment, the output data is indicative for at least one modeled process variable of the filtration process. The modeled process variable is a process variable of the filtration process predicted or modeled, respectively, by the filtration process model. The modeled process variable may be extractable from the output data. The modeled process variable may represent a process variable of the filtration process which is measurable with help of a measurement unit, e.g. in-line or in real-time, or which cannot be measured in-line with help of a measurement unit or which can only be measured offline, respectively.

In at least one embodiment, the method for monitoring a filtration process in which a first solution is processed by a filter system comprises:

- receiving first measurement data which are indicative for at least one input process variable, wherein the at least one input process variable is a process variable of the filtration process measurable during the filtration process with help of a measurement unit,

- determining output data by executing a filtration process model and using the first measurement data, wherein

  - executing the filtration process model comprises solving at least one physical equation describing the interaction between solutes of the first solution,
  - at least one parameter of the filtration process model is dependent on the at least one input process variable derived from the first measurement data,
  - the output data is indicative for at least one modeled process variable of the filtration process.

The present invention is, inter alia, based on the idea to model process variables with help of a filtration process model which appropriately takes into account the underlying physics of the filtration process. This is achieved by a filtration process model which solves one or more physical equations describing the interaction between solutes of the first solution and additionally using measurement data as an input to the filtration process model. Due to this, the filtration process model can be applied to solutions comprising different products and can be applied in a much wider process window than, e.g., statistical models. Moreover, with such a filtration process model, not only the actual state of the filtration process can be described but also past states can be reconstructed and/or future states can be predicted. Deviations in the filtration process from the desired filtration process can be detected at an early stage. Furthermore, the predictions of the filtration process model can be used to control the filtration process in order to counteract identified process deviations. A further advantage of the present invention is that the first measurement data can be obtained with univariate hardware sensors which can be implemented easily in filter systems.

According to at least one embodiment, the method comprises a step in which the output data are analyzed in order to adjust the filtration process when necessary. For example, when analyzing the output data, the at least one modeled process variable is compared to a reference process variable. If the deviation between the modeled process variable and the reference process variable exceeds a certain threshold, the filtration process may be adjusted, e.g. by controlling a controllable process parameter of the filtration process, e.g. by controlling an actuator of the filter system. The controllable process parameter may be the amount and/or (volumetric) flowrate of the permeate removed from the first solution. Additionally or alternatively, the at least one controllable process parameter may be the amount and/or (volumetric) flowrate of the second solution mixed to the first solution. Also, other controllable process parameters of the filtration process may be controlled in order to adjust the filtration process, e.g. the temperature of the first and/or second solution and/or the duration of different steps of the filtration process. If the deviation between the modeled process variable and the reference process variable is below the certain threshold, the filtration process may not be adjusted.

According to at least one embodiment, the output data is indicative for the time dependency of the at least one modeled process variable. In other words, the time dependency of the at least one modeled process variable is modeled with the filtration process model. Particularly, the output data may be indicative for the future development of the modeled process variable. Thus, the filtration process model may predict how the modeled process variable develops or changes in the future, e.g. from the current state to the end of the filtration process.

According to at least one embodiment, determining the output data is done during the filtration process. Additionally or alternatively, determining the output data is done in real-time. Particularly, the output data is obtained before the filtration process has been finished. Preferably, the output data is determined during the same filtration process during which the input process variable is measured. For example, a time window between measuring the at least one input process variable with help of a measurement unit and the determination of the output data is at most 1 minute or at most 10 seconds or at most 1 second.

According to at least one embodiment, the at least one physical equation is based on or is derived from or is the Poisson-Boltzmann equation. Additionally or alternatively, the filtration process model is based on a cell model approach. For example, the Poisson-Boltzmann equation on the retentate side is solved. The Poisson-Boltzmann equation may be solved numerically.

When using a spherical cell model approach, the Poisson-Boltzmann equation may be formulated as follows:

$$\frac{\partial^2 \psi(r)}{\partial r^2} + \frac{2}{r} \frac{\partial \psi(r)}{\partial r} = -\frac{e}{\varepsilon \varepsilon_0} \sum_i \bar{c}_i z_i \exp\left( -\frac{z_i e}{k_{\mathrm{b}} T} (\psi(r) - \bar{\psi}) \right)$$

wherein $\psi$ is the electrostatic potential at radius $r$, $\varepsilon$ is the relative permittivity, and $\varepsilon_0$ is the vacuum permittivity. $r$ denotes the radius relative to the center of the cell. The cell may be a Wigner-Seitz cell. $\bar{c}_i$ is the average microion concentration in the cell volume and $z_i$ is the charge of the corresponding microion. $\bar{\psi}$ denotes the average electrostatic potential in the Wigner-Seitz cell. $k_{\mathrm{b}}$ represents the Boltzmann constant, and T is the temperature.

According to at least one embodiment, the model assumes Donnan equilibrium in the filter module. Particularly, the filter module comprises a semipermeable membrane.

According to at least one embodiment, in the cell model approach, the first solution is reduced to a single Wigner-Seitz cell. For example, the Wigner-Seitz cell contains one molecule, particularly only one molecule, of the product. For example, this molecule is located in the center of the cell.

According to at least one embodiment, the radius $R_{\mathrm{WS}}$ of the Wigner-Seitz cell is defined by the concentration of the product $c_{\mathrm{M}}$ in the first solution and may be

$$R_{\mathrm{WS}} = \left( \frac{3}{4\pi N_{\mathrm{A}} c_{\mathrm{M}}} \right)^{\frac{1}{3}}$$

wherein $N_{\mathrm{A}}$ is the Avogadro constant. The Wigner-Seitz cell may be a spherical Wigner-Seitz cell. Alternatively, the Wigner-Seitz cell may be of non-spherical shape, e.g. cylindrical or cubic shape.

By using this formula for the radius of the Wigner-Seitz cell, the Poisson-Boltzmann equation can be solved very efficiently which reduces the computational time and thus allows a real-time determination of the output data.

According to at least one embodiment, the at least one input process variable is the pH value of the first solution and/or of the second solution mixed to the first solution during the filtration process. For example, the pH value of the first solution measured at the beginning of the filtration process (at time t = 0) may be used as a first input process variable. The pH value of the second solution measured once ore continuously or repeatedly during the filtration process, e.g. during mixing to the first solution, may be used as a second input process variable.

According to at least one embodiment, at least one further parameter of the filtration process model, e.g. of the at least one physical equation, is dependent on the composition of the first solution and/or of the second solution mixed to the first solution during the filtration process. Additionally or alternatively, the at least one further parameter of the filtration process model is dependent on the charge and/or surface charge density of a solute, e.g. of the at least one product, in the first solution. It is also possible that the at least one further parameter of the model is indicative for the interaction between solutes, e.g. between the at least product and other solutes.

The at least one further parameter of the model may be predetermined. For example, the at least one further parameter of the model is not measured during the filtration process and/or is determined offline. For example, the at least one further parameter is guessed or calculated or determined before starting the filtration process. The at least one further parameter may, however, be validated during the method and/or during previous filtration processes. For example, the at least one further parameter of the model is adjusted during the method, e.g. when a modeled process variable extracted from the output data deviates from a reference process variable by more than a certain threshold. For example, the concentration of at least one product or another solute in the first solution at the beginning of the filtration process (at time t=0) may be determined offline. Additionally or alternatively, the concentration of a solute in the second solution at t=0 may be determined offline.

According to at least one embodiment, the at least one modeled process variable extractable from the output data is the concentration of a solute of the first solution and/or of a solute of the permeate of the filtration process. For example, the at least one modeled process variable extractable from the output data is the concentration of the at least one product in the first solution. Additionally or alternatively, the at least one modeled process variable may be the concentration of an excipient in the first solution and/or in the permeate. The modeled process variable may be the concentration of the solute as a function of time, i.e. also the future development of the concentration may be extractable.

According to at least one embodiment, the at least one modeled process variable is a measurable process variable, e.g. a process variable which can be measured during the filtration process with help of a measurement unit. Particularly, a measurable process variable may be a process variable which can be measured in-line and/or in-real-time during the filtration process.

According to at least one embodiment, the at least one modeled process variable is the pH value of the first solution and/or of the permeate of the filtration process. Additionally or alternatively, the at least one modeled process variable may be the electrical conductivity of the first solution and/or of the permeate. A further possibility is that the at least one modeled process variable is the absorption of the first solution and/or of the permeate to radiation, e.g. UV radiation, visible light or IR radiation.

The filtration process model may, in particular, model several or all of the herein-mentioned modeled process variables.

According to at least one embodiment, the method further comprises a step in which second measurement data are received. The second measurement data may be indicative for at least one reference process variable. The at least one reference process variable may be a process variable of the filtration process measurable or measured during the filtration process with help of a measurement unit, e.g. in-line and/or in real-time. For example, the at least one reference process variable represents the same process variable as at least one modeled process variable. The at least one reference process variable may be measured only once during the filtration process or may be repeatedly or continuously measured during the filtration process.

According to at least one embodiment, the method comprises a step in which the at least one reference process variable is compared with the at least one modeled process variable.

According to at least one embodiment, the method comprises a step in which at least one parameter of the filtration process model, e.g. of the at least one physical equation, is adjusted based on the comparison in order to adapt the at least one modeled process variable to the at least one reference process variable. For example, when the at least one modeled process variable deviates from the at least one reference process variable by more than a certain threshold, the at least one parameter of the at least one physical equation is adapted.

For example, the at least one reference process variable and the at least one modeled process variable represent the pH value and/or the electrical conductivity and/or the absorption of the first solution and/or of the permeate of the filtration process. The at least one parameter of the model adjusted based on the comparison may be the above-mentioned at least one further parameter of the model, e.g. the composition of the first solution at the beginning of the filtration process and/or the composition of the second solution and/or the charge and/or the surface charge density of a solute.

Additionally or alternatively to adjusting the at least one parameter of the filtration process model based on the comparison, also the filtration process can be adjusted based on this comparison as described above.

According to at least one embodiment, the method comprises a step in which a control signal is generated based on the output data. For example, the control signal is generated automatically based on an automatic analysis of the output data as described above.

According to at least one embodiment, the control signal is configured for controlling at least one controllable process parameter of the filtration process and/or to call for controlling of the at least one controllable process parameter. For example, an actuator may be controlled, e.g. by the control signal. Additionally or alternatively, the control signal may inform a user, e.g. via a computer screen or by an audible indication, that the user should manually control the at least one controllable process parameter or the actuator, respectively. The controllable process parameter may be the (volumetric) flowrate of the permeate and/or of the second solution added to the first solution. Additionally or alternatively, the controllable process parameter may be the duration of one or more steps of the filtration process.

According to at least one embodiment, the filtration process is an ultrafiltration process and/or a diafiltration process. In an ultrafiltration step/process, no second solution is mixed to the first solution. By removing permeate from the first solution, the volume of the first solution is reduced and the at least one product is concentrated in the first solution from its initial concentration to a desired intermediate or final concentration. In a diafiltration process, the second solution is mixed to the first solution. Usually, the flowrate of the second solution mixed to the first solution and the flowrate of the permeate removed from the first solution is chosen to be equal so that the volume of the first solution and with this the concentration of the at least one product in the first solution remains constant. The concentration of the other excipients in the first solution may, however, change.

In an ultrafiltration and diafiltration (UFDF) process, a first ultrafiltration step may be performed in order to concentrate the at least one product from its initial concentration to a desired intermediate concentration. Afterwards, a diafiltration step may be performed, in which the concentration of the at least one product may remain constant while the concentration of other solutes or excipients in the first solution may change. Then, in a second ultrafiltration step, the at least one product is concentrated in the first solution to its final concentration.

According to at least one embodiment, the filtration process is configured to increase and/or decrease the concentration of at least one solute in the first solution. For example, the filtration process is configured to increase the concentration of the at least one product in the first solution.

According to at least one embodiment, at least one solute of the first solution, e.g. the at least one product, is a biological molecule. The biological molecule may be one or more of: a protein, a peptide, a nucleic acid, a virus, a virus fragment.

According to at least one embodiment, at least one further solute of the first solution and/or of the second solution, e.g. an excipient, may be one or more of: an amino acid, a buffer component, a carbohydrate, a salt ion. Particularly, the second solution may comprise a buffer component in order to adjust the pH value of the first solution when mixed to the first solution.

According to at least one embodiment, the at least one input process variable is one or more of: pH value of the first solution (e.g. at the beginning of the filtration process), pH value of the second solution mixed to the first solution during the filtration process (the pH value of the second solution may not change during the filtration process), electrical conductivity of the first solution and/or the second solution, absorption and/or absorbance of the first and/or the second solution, temperature of the first and/or second solution, flowrate of the first solution and/or second solution during mixing to the first solution, information whether the second solution is currently mixed to the first solution or not.

The absorption or absorbance of the first solution and/or second solution may be the absorption/absorbance to UV radiation and/or visible light and/or to IR radiation.

According to at least one embodiment, the method is a computer implemented method. Particularly, some or all steps of the method are executed by a computer or by a processor of the computer.

Next, the device, the computer program and the computer-readable data carrier are specified.

According to at least one embodiment, the device comprises at least one processor configured to perform the method for monitoring a filtration process as specified herein.

According to at least one embodiment, the computer program comprises instructions which, when the program is executed by a computer, cause the computer to carry out the method for monitoring a filtration process as specified herein.

According to at least one embodiment, the computer-readable data carrier comprises instructions which, when executed by a computer, cause the computer to carry out the method for monitoring a filtration process as specified herein.

Next, the filter system for a filtration process is specified. The filter system may be used for the filtration process and for the method for monitoring the filtration process as specified herein. Therefore, all features disclosed in connection with the method for monitoring a filtration process and with the filtration process disclosed herein are also disclosed for the filter system and vice a versa.

According to at least one embodiment, the filter system comprises the device specified herein.

According to at least one embodiment, the filter system comprises at least one measurement unit for measuring a process variable of the filtration process. The measurement unit may be configured for measuring a pH value, e.g. by measuring the electrical conductivity of a solution and/or by measuring an electrical potential difference in a solution, and/or to measure the temperature of a solution and/or to measure the electrical conductivity of a solution and/or to measure an absorption/absorbance of a solution. Particularly, the at least one measurement unit is configured to measure the at least one input process variable and/or the at least one reference process variable specified herein. The filter system may comprise measurement units for several or all of the above-mentioned process variables.

According to at least one embodiment, the filter system comprises a first solution reservoir for storing the first solution.

According to at least one embodiment, the at least one filter system comprises a filter module. The filter module may comprise an inlet fluidically coupled to the first solution reservoir. For example, the first solution reservoir is connected to the inlet of the filter module via a first connection. The filter module may comprise an outlet for removing the permeate of the filtration process. The filter module may comprise a further outlet through which the retentate leaves the filter module. The second outlet may be fluidically connected to the first solution reservoir via a second connection so that the retentate can again be guided into the first solution reservoir.

According to at least one embodiment, the filter system comprises a second solution reservoir for storing the second solution.

According to at least one embodiment, the second solution reservoir is fluidically coupled to the first solution reservoir, e.g. by a third connection. The second solution reservoir may be directly fluidically coupled to the first solution reservoir or indirectly, e.g. via the first or second connection.

According to at least one embodiment, the first and/or the second and/or the third connection may comprise a valve and/or a pump for controlling the (volumetric) flowrate through the respective connection. A valve and/or a pump may be also assigned to the outlet of the filter module in order to control the flowrate of the permeate removed from the filter module.

The one or more measurement units of the filter system may be assigned to the first and/or the second and/or the third connection and/or the outlet of the filter module.

According to at least one embodiment, at least one measurement unit is arranged to measure a process variable of the first solution. For example, the at least one measurement unit is assigned to or located in the first solution reservoir and/or assigned to a located in the first connection. At least one input process variable may be measurable with this measurement unit.

According to at least one embodiment, at least one measurement unit is arranged to measure a process variable of the second solution. For example, this at least one measurement unit is assigned to or located in the second solution reservoir and/or in the third connection between the second solution reservoir and the first solution reservoir. At least one input process variable may be measurable with this measurement unit.

According to at least one embodiment, at least one measurement unit is arranged to measure a process variable of the permeate of the filtration process. This at least one measurement unit may be assigned to the outlet of the filter module. At least one reference process variable may be measurable with this measurement unit.

According to at least one embodiment, at least one measurement unit is assigned to or located in the second connection between the filter module and the first solution reservoir, e.g. in order to measure a process variable of the retentate.

According to at least one embodiment, the filter system comprises at least one actuator for controlling at least one controllable process parameter of the filtration process. For example, the actuator may control a pump and/or valve in the filter system in order to control a flowrate.

According to at least one embodiment, the filter module comprises a cross-flow filtration module and/or a dead-end filtration. The filter module may comprise at least one hollow-fiber membrane and/or at least one flat sheet membrane.

Hereinafter, the method for monitoring a filtration process, the device and the filter system described herein will be explained in more detail with reference to drawings on the basis of exemplary embodiments. Same reference signs indicate same elements in the individual figures. However, the size ratios involved are not necessarily to scale, individual elements may rather be illustrated with exaggerated size for better understanding.

Figure 1 shows an exemplary embodiment of the filter system,

Figure 2 shows results of an exemplary embodiment of the method for monitoring a filtration process,

Figures 3 to 5 show flowcharts of exemplary embodiments of the method for monitoring a filtration process.

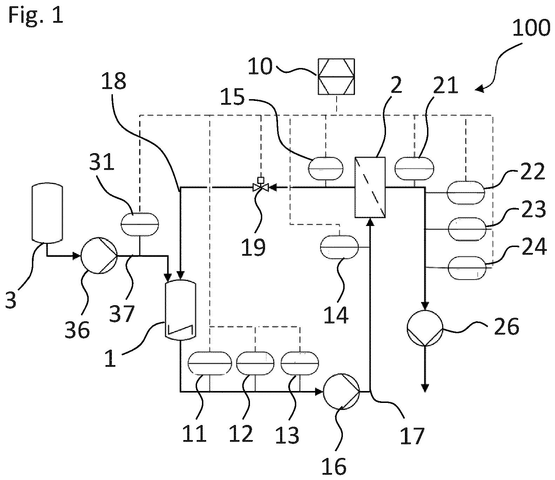

Figure 1 shows an exemplary embodiment of a filter system 100 for a filtration process. The filter system 100 comprises a first solution reservoir 1 for storing a first solution, a filter module 2 and a second solution reservoir 3. The first solution reservoir 1 is fluidically connected to an inlet of the filter module 2 via a first connection 17. Several measurement units 11, 12, 13, 14 are assigned to the first connection 17. Measurement unit 11 may be a pH sensor for measuring the pH value of the first solution flowing through the first connection 17. Measurement unit 12 may be a conductivity sensor for measuring the electrical conductivity of the first solution flowing through the first connection 17. Measurement unit 13 may be an absorption/absorbance sensor for measuring the absorption/absorbance of radiation, e.g. of UV radiation or visible light or IR radiation, by the first solution flowing through the first connection 17. Measurement unit 14 may be a pressure sensor for measuring the pressure of the first solution in the first connection 17. A pump 16 is assigned to the first connection 17 and may control the flowrate of the first solution pumped from the first solution reservoir 1 to the filter module 2. Additionally, there may be a measurement unit in form of flowmeter for measuring the flowrate of the first solution flowing through the first connection 17.

The filter module 2 may comprise a semipermeable membrane. The semipermeable membrane may be configured to let a solvent of the first solution and some solutes, e.g. excipients, in the first solution pass but to retain a dissolved product in the first solution. The filter module 2 comprises an outlet for removing the permeate passing through the semipermeable membrane. Measurement units 21, 22, 23, 24 are assigned to this outlet or to a connection from this outlet, respectively. Measurement unit 21 may be a pH sensor for measuring the pH value of the permeate, measurement unit 22 may be configured to measure the pressure of the permeate, measurement unit 23 may be a conductivity sensor for measuring the electrical conductivity of the permeate and measurement unit 24 may be a flowmeter for measuring the flow rate of the permeate. A pump 26 is assigned to the outlet of the filter module 2 in order to remove the permeate.

The filter module 2 comprises a further outlet through which the retentate leaves the filter module. The further outlet is fluidically connected to the first solution reservoir 1 via a second connection 18 through which the retentate is guided into the first solution reservoir 1. A measurement unit 15 in form of a pressure sensor and/or a flowmeter are assigned to the second connection 18. Furthermore, a valve 19 is assigned to the second connection 18.

A second solution reservoir 3 for storing a second solution is fluidically connected to the first solution reservoir 1 via a third connection 37. The second solution may be guided through the third connection 37 into the first solution reservoir 1. A measurement unit 31, e.g. in form of a pH sensor or conductivity sensor or absorption sensor or pressure sensor or flowmeter may be assigned to the third connection 37. It is also possible to use two or more of the mentioned sensors for measuring properties of the second solution. Furthermore, a pump 36 is assigned to the third connection 37 in order to pump the second solution from the second solution reservoir 3 into the first solution reservoir 1.

As can be seen in figure 1, measurement signals or measurement data, respectively, measured with the different measurement units are received by a device 10. The device 10 may comprise at least one processor for performing the method for monitoring a filtration process as described herein.

The filter system 100 shown in figure 1 may be a filter system for performing an ultrafiltration and diafiltration (UFDF) process. At the beginning of the filtration process, an initial first solution is stored in the first solution reservoir 1 and a second solution is stored in the second solution reservoir 3. The initial first solution may comprise a dissolved product. The product may be biological molecule, like a protein, a peptide, a nucleic acid or a virus. Besides the product, the initial first solution may comprise further solutes, like amino acids, carbohydrates and/or salt ion. The second solution may comprise a solute in form of a buffer component.

In a first ultrafiltration step, no second solution is pumped into the first solution reservoir 1. The initial first solution is pumped from the first solution reservoir 1 to the filter module 2. The semipermeable membrane of the filter module 2 may allow some of the solutes but the product to pass. A permeate comprising the passed solutes can be pumped away with help of the pump 26. The remainder of the first solution (retentate) which has not passed through the semipermeable membrane comprises the product and is guided back to the first solution reservoir 1. The retentate gradually replaces the initial first solution so that that the composition of the first solution changes. During this ultrafiltration step, the concentration of the product in the first solution is increased.

After that, a diafiltration step may be performed in which the second solution containing the buffer component is pumped into the first solution reservoir 1 with help of the pump 36 and is mixed to the first solution. At the same time, the first solution is pumped from the first solution reservoir 1 through the filter module 2. For example, the flowrate of the second solution pumped into the first solution reservoir 1 is the same as the flowrate of the permeate pumped away from the filter module 2 with help of the pump 26. Thus, the volume of the first solution containing the product remains constant. Moreover, when the flowrates are equal, also the concentration of the product in the first solution remains constant. However, the composition of the first solution containing the products changes due to removal of the permeate containing solutes and the adding of the second solution containing the buffer component.

After the diafiltration process, a second ultrafiltration step may be performed, in which again no second solution is pumped into the first solution reservoir 1 but only permeate is removed. In this step, the product may be concentrated in the first solution to its final concentration.

The device 10 may be configured to perform the method for monitoring the filtration process. An exemplary embodiment of the method is as follows: In one step, first measurement data are received by the device 10. The first measurement data are indicative for at least one input process variable, e.g. for the pH value of the second solution and the pH value of the first solution at the beginning of the filtration process, i.e. the pH value of the initial first solution. In a further step of the method, output data are determined by executing a filtration process model 4 using the first measurement data. The execution of the filtration process model 4 comprises solving a physical equation describing the interaction between the solutes of the first solution, wherein at least one parameter of the process filtration model, e.g. of the physical equation, is dependent on the at least one input process variable extractable from the first measurement data. The output data are indicative for at least one modeled process variable of the filtration process, e.g. for the concentration of the product in the first solution and/or the pH value of the permeate as a function of time.

An exemplary embodiment of the filtration process model 4 may be as follows:

1. Mass balance

The filtration process model 4 may predict the concentration of solutes in the retentate/first solution by solving global mass balance equations for the filter system 100. The mass balance equations are solved based on measurements in the second solution and in the first solution. The mass balance equations consider interactions between the product and other solutes, e.g. excipients.

Solution streams going in and out of the filter module 2 are considered to contain small solutes like buffer substances, carbohydrates, and amino acids with a concentration $c_i$. The product, e.g. a protein, on the other hand, cannot pass through the semipermeable membrane and, therefore, is fully retained in the retentate. The product concentration $c_M$ in the retentate is therefore defined by the mass balance

$$\frac{dc_M(t)}{dt} = -\frac{c_M(t)}{V_{Ret}(t)}(Q_{DF}(t) - Q_{Perm}(t)), \qquad (1)$$

where t represents the process time, $V_{Ret}$ is the total retentate volume within the system, $Q_{DF}$ is the flowrate of the second solution added to the first solution, and $Q_{Perm}$ is the flowrate of the permeate. The index "Ret" is herein used for the retentate/first solution, the index "DF" is used for the second solution and the index "Perm" is used for the permeate. The flowrates $Q_{DF}$ and $Q_{Perm}$ can be measured, for instance, using flowmeters. The temporal change of $V_{Ret}$ is defined by the balance

$$\frac{dV_{Ret}(t)}{dt} = Q_{DF}(t) - Q_{Perm}(t). \qquad (2)$$

During ultrafiltration, no second solution is added to the first solution ($Q_{DF} = 0$) and the product is concentrated. During diafiltration, the volumetric flowrate of the second solution is assumed to be equal the volumetric flowrate of the permeate ($Q_{DF} = Q_{Perm}$) and $V_{Ret}$ is constant.

Small solutes, particularly excipients, like buffer components and amino acids in the first solution are not retained by the filter module 2 and can leave the filter system 100 via the outlet of the filter module 2 as described by

$$\frac{dc_{Ret,i}(t)}{dt} = \frac{Q_{DF}(t)}{V_{Ret}(t)}\left(c_{DF,i}(\text{pH}_{DF}) - c_{Ret,i}(t)\right) \\ - \frac{Q_{Perm}(t)}{V_{Ret}(t)}\left(c_{Perm,i}(t, c_M, c_{Ret}, \text{pH}_{Ret}) - c_{Ret,i}(t)\right). \tag{3}$$

Solving the ordinary differential equations above, the product concentration $c_M(t)$, the first solution volume $V_{Ret}(t)$, and the excipient concentrations $c_{Ret,i}(t)$ can be described as a function of the process time. The concentration of the excipients inside the permeate

$$c_{Perm,i} = f(t, c_M, c_{Ret}, \text{pH}_{Ret}) \tag{4}$$

is thereby a function of the current concentrations in the retentate $c_{Ret}$, the product concentration $c_M$, and the pH value in the retentate $\text{pH}_{ret}$. The concentration of an excipient inside the second solution

$$c_{DF,i} = f(\text{pH}_{DF}) \tag{5}$$

may be a function of the measured pH value in the second solution ($\text{pH}_{DF}$).

2. Composition of solutions

The filtration process model 4 may use the pH value of the second solution, equilibrium equations, and the conditions of electroneutrality in the second solution reservoir 3 to determine the composition of the second solution mixed to the first solution via pump 36. Likewise, the composition of the first solution can be determined. Therefore, the following formulas are applicable for the first solution as well.

The second solution (as well as the first solution and the permeate) may contain various solutes, particularly excipients, such as buffer components, amino acids and salts. Depending on the pH value, some of these excipients can be present in different protonation states and thus ionized forms. Therefore, the exact ion composition of the second solution depends on the pH value. Considering, for instance, a second solution that contains a buffer component i with known total concentration $c_i$. The buffer component possesses n dissociation sites. In this case, the buffer component i itself can be present in n + 1 ionization states. Thus, the total concentration of buffer component i is equal to

$$c_i = \sum_{j=1}^{n+1} c_{i,j}(\text{pH}), \tag{6}$$

where $c_{i,j}$ is a function of the pH value. The first ionization state $j = 1$ denotes the fully protonated state indicated by $H_nA^m$, where $m$ represents the charge of the fully protonated state. Considering the general dissociation reaction of the buffer substance

$$H_{n-j+1}A^{m-j+1} \leftrightharpoons H_{n-j}A^{m-j} + H^+ \tag{7}$$

and its equilibrium constant

$$K_j^* = \frac{\left[H_{n-j}A^{m-j}\right]}{\left[H_{n-j+1}A^{m-j+1}\right]} 10^{-\text{pH}}, \tag{8}$$

the concentrations of the ionization states are defined by the measured pH value according to

$$c_{i,1}(\text{pH}) = c_i(10^{-\text{pH}})^n \left( (10^{-\text{pH}})^n + \sum_{k=1}^{n} (10^{-\text{pH}})^{n-k} \sum_{l=1}^{k} K_l^* \right)^{-1} \quad (9)$$

and

$$c_{i,j}(\text{pH}) = c_i(10^{-\text{pH}})^{n-j+1} \prod_{k=1}^{j-1} K_k^* \left( (10^{-\text{pH}})^n \right.$$
$$\left. + \sum_{k=1}^{n} (10^{-\text{pH}})^{n-k} \sum_{l=1}^{k} K_l^* \right)^{-1}, \qquad j = 2 \ldots n + 1. \quad (10)$$

In the second solution, the charge of all ionized forms is balanced by counter-ions. The concentration of these counter-ions entering the mass balance equation above is not known but can be derived from the condition of electroneutrality in the second solution reservoir 3. If the charge of the j-th ionization state is denoted by $z_{i,j}$, the concentration of counter-ions $c_C$ results from the electroneutrality condition

$$c_C(\text{pH}_{\text{DF}}) = \left| \sum_i \sum_j z_{i,j} c_{i,j}(\text{pH}_{\text{DF}}) \right|.$$

<u>3. Product-excipient interaction</u>

The filtration process model 4 may use the Poisson-Boltzmann equation to describe interactions between the product and smaller solutes (excipients) in the first solution.

If we assume that the retentate/first solution and the permeate are in thermodynamic equilibrium (Donnan equilibrium), the relationship $c_{\text{Perm},i} = f(t, c_M, c_{\text{Ret}}, \text{pH}_{\text{Ret}})$ in the mass balance above is given by the Boltzmann relation

$$c_{\text{Perm},i} = \sum_j \frac{c_{\text{Ret},i,j}}{1-\Theta} \exp\left( z_{i,j} \frac{e\overline{\psi}(c_M, c_{\text{Ret}}, \text{pH}_{\text{ret}})}{k_b T} \right), \quad (11)$$

where $\psi$ is the average electrostatic potential in the first solution, $k_b$ represents the Boltzmann constant, T is the absolute temperature, $N_A$ is the Avogadro number, and

$$\Theta = \frac{4}{3} \pi a_M^3 c_M N_A \quad (12)$$

describes the volume fraction of the first solution occupied by the product with known radius $a_M$. The product $z_{i,j}e\overline{\psi}$ in the exponent is a measure for the interaction between an excipient and the product. If the term is positive, the excipient is repelled by the product. If the term is negative, the excipient is attracted by the product and retained within the retentate. The average electrostatic potential $\overline{\psi}$ can be interpreted as the Donnan potential describing the unequal solute concentration distribution across the membrane due to interactions between the product and other solutes. It must suffice the electroneutrality condition on the permeate side

$$0 = \sum_i \sum_j z_{i,j} c_{\text{Perm},i,j}$$
$$= \sum_i \sum_j z_{i,j} \frac{c_{\text{Ret},i,j}}{1-\Theta} \exp\left( z_{i,j} \frac{e\overline{\psi}(c_M, c_{\text{Ret}}, \text{pH}_{\text{ret}})}{k_b T} \right) \quad (13)$$

and the Poisson-Boltzmann equation on the retentate side

$$\frac{\partial^2 \psi(r)}{\partial r^2} + \frac{2}{r}\frac{\partial \psi(r)}{\partial r} = -\frac{e}{\varepsilon \varepsilon_0}\sum_i z_i \frac{c_{\text{Ret},i}}{1-\Theta}\ \exp\left(\frac{z_i e}{k_{\text{b}} T}(\psi(r)-\bar{\psi})\right). \qquad (14)$$

The Poisson-Boltzmann equation may be solved using the cell model. Within the cell model, the first solution is reduced to a single Wigner-Seitz (WS) cell containing one product molecule at its center. The WS cell may be spherical in shape. In this case, the radius of the WS cell $R_{\text{WS}}$ is defined by the product concentration according to

$$R_{\text{WS}} = \left(\frac{3}{4\pi N_A c_{\text{M}}}\right)^{\frac{1}{3}}. \qquad (15)$$

Using the cell model, the Poisson-Boltzmann equation can be solved numerically using the boundary condition

$$\left.\frac{\partial \psi}{\partial r}\right|_{r=a_{\text{M}}} = -\frac{e z_{\text{M}}(\text{pH}_{\text{ret}})}{4\pi a_{\text{M}}^2 \varepsilon \varepsilon_0} \qquad (16)$$

at the surface of the product molecule, and the condition

$$\left.\frac{\partial \psi}{\partial r}\right|_{r=R_{\text{WS}}} = 0 \qquad (17)$$

at $R_{\text{WS}}$, where $z_{\text{M}}$ represents the net charge of the product molecule. Solving the Poisson-Boltzmann equation leads to $\bar{\psi}$ ($c_{\text{M}}$, $c_{\text{Ret}}$, $\text{pH}_{\text{ret}}$) and thus $c_{\text{Perm},i} = f(t,c_{\text{M}},c_{\text{Ret}}, \text{pH}_{\text{Ret}})$ for the mass balance equation.

Product charge

The filtration process model 4 calculates the charge of the product $z_{\text{M}}$ ($\text{pH}_{\text{ret}}$) used in the Poisson-Boltzmann equation above based on the known primary sequence when the product is a protein.

The net charge of the protein $z_{\text{M}}$ can be derived theoretically from the known primary sequence of the protein. Proteins are biopolymers which are based on amino acids as building blocks. The order in which the amino acids are arranged in the polypeptide chain defines the protein's primary sequence. The net charge depends on the number of ionizable amino acids in the primary sequence and their pKa values. Considering an ionizable amino acid side chain j with charge $\zeta_j$ of the protonated form $\text{HA}^{\zeta_j}$, the dissociation reaction

$$\text{HA}^{\zeta_j} \rightleftharpoons \text{A}^{\zeta_j-1} + \text{H}^+$$

is defined by the equilibrium constant of the amino acid

$$K_j = 10^{-\text{pK}_j} = \frac{\left[\text{A}^{\zeta_j-1}\right]}{\left[\text{HA}^{\zeta_j}\right]}10^{-\text{pH}},$$

whereby square brackets depict molar concentrations. The ionizable amino acids may, e.g., include arginine, histidine, lysine, aspartic acid, and glutamic acid. In this case, $z_{\text{M}}$ is defined by

$$z_{\text{M}}(\text{pH}_{\text{ret}}) = \sum_j N_j \frac{\zeta_j + (\zeta_j - 1)10^{\text{pH}_0-\text{pK}_j}}{1 + 10^{\text{pH}_0-\text{pK}_j}}, \qquad (18)$$

where $N_j$ denotes the number of the j-th ionizable side chain in the primary sequence and $\text{pH}_0$ is the pH-value at the surface of the protein defined by

$$pH_0 = pH_{ret} + \frac{1}{\ln(10)}\frac{e}{k_b T}(\psi(a_M) - \overline{\psi}). \qquad (19)$$

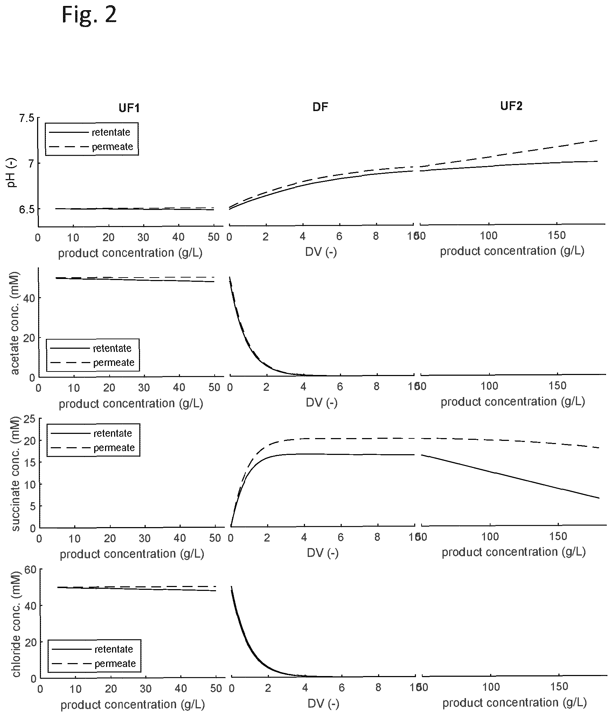

Figure 2 shows modeled process variables extracted from the output data obtained by using this filtration process model 4. The filtration process model 4 was applied to describe the ultrafiltration and diafiltration (UFDF) process of the protein glucose oxidase as the product of the first solution. The charge of the product glucose oxidase was calculated using the following table:

| Amino acid | Quantity | pK value |
|---|---|---|
| Lysine | 30 | 10.4 |
| Arginine | 44 | 12.0 |
| Histidine | 38 | 6.3 |
| Glutamic acid | 60 | 4.4 |
| Aspartic acid | 72 | 4.0 |
| tyrosine | 54 | 9.6 |
| N termini | 2 | 7.5 |
| C termini | 2 | 3.8 |

At the beginning of the UFDF process, the protein was dissolved in 50 mM sodium acetate buffer with 50 mM sodium chloride (pH 6.5). The initial protein concentration in the initial first solution was 5 g/L. During a first ultrafiltration step (UF1), the protein was concentrated to an intermediate concentration of 50 g/L. Afterwards, the protein was diafiltrated over 10 diavolumes (DV) using 20 mM succinate as the second solution (pH 7.0). In a second ultrafiltration step (UF2), the first solution was concentrated to a final protein concentration of 180 g/L.

The ordinary differential equations (ODEs) Eq.(1)-Eq.(3) were solved in MATLAB (The Mathworks, Natick, Massachusetts, USA) using the ODE solver ode15s. At every time step, $pH_{ret}$ and $\overline{\psi}$ were determined iteratively so that $\overline{\psi}$ is in compliance with both the electroneutrality condition in the permeate [Eq.(13)] and the Poisson-Boltzmann equation in the first solution [Eq.(14)]. First, $pH_{ret}$ was guessed and used to determine the concentrations of microions $c_{Ret,i,j}$ is the retentate/first solution according to the buffer equilibrium Eq.(9)-Eq.(10). Knowing $c_{Ret,i,j}$, $\overline{\psi}$ was determined to suffice the electroneutrality condition on the permeate side [Eq.(13)]. Afterwards, the Poisson-Boltzmann equation within the WS cell was solved using Eq. (18) for $z_M$ of glucose oxidase. Using for example a *regula falsi* approach, the unknown $pH_{ret}$ can be varied until $\overline{\psi}$ sufficed both the electroneutrality condition [Eq.(13)] and the Poisson-Boltzmann equation within the WS cell. Alternatively, the pH in the first solution $pH_{ret}$ can be derived from measurement data that are indicative for $pH_{ret}$.

The filtration process model 4 of this exemplary embodiment determines output data which are indicative for the modeled process variable which are: the pH values of the permeate and the retentate and concentrations of different solutes.

The upper picture of figure 2 shows the pH values of the permeate (dashed line) and the retentate (solid line) as a function of the product concentration in the retentate or first solution. As the product concentration increases with time during the filtration process, the x-axis also represents a time axis. The different steps of the filtration process UF1, DF, and UF2 are also indicated.

In the second picture of figure 2, the concentration of an excipient, namely of acetate, in the permeate (dashed line) and the retentate (solid line) as a function of the product concentration in the retentate is shown.

In the third picture of figure 2, the concentration of an excipient, namely of succinate, in the permeate (dashed line) and the retentate (solid line) as a function of the product concentration in the retentate is shown.

In the fourth picture of figure 2, the concentration of an excipient, namely of chloride, in the permeate (dashed line) and the retentate (solid line) as a function of the product concentration in the first retentate is shown.

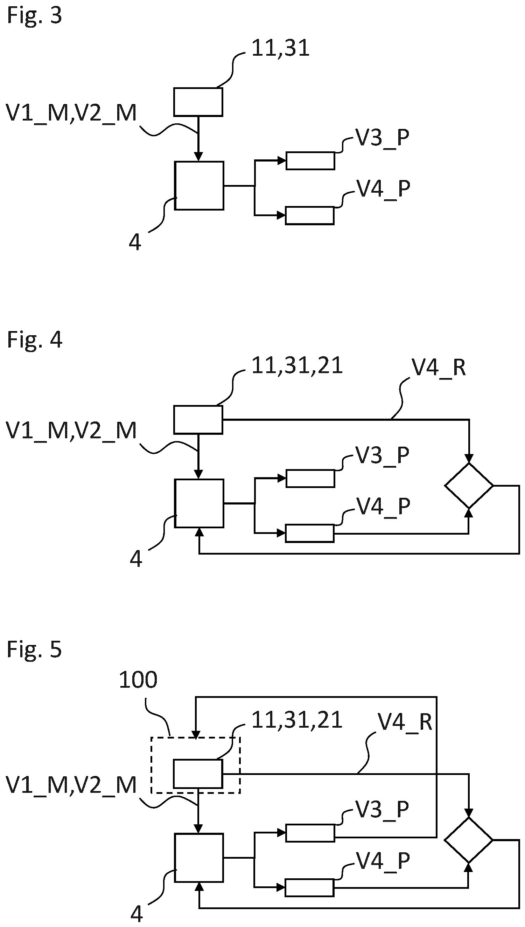

Figure 3 shows a flowchart of an exemplary embodiment of the method for monitoring a filtration process. The filtration process is, e.g., done with the filter system 100 of figure 1. First measurement data which are indicative for two input process variables V1_M, V2_M measured with help of two measurement units 11, 31 are received and used as an input for the filtration process model 4. The input process variables may be, e.g., the pH value of the second solution V2_M and the pH value of the first solution V1_M at the beginning of the filtration process. However, also additional or other input process variables, like the electrical conductivity and/or the absorption of the first solution and the second solution may be used. The filtration process model 4 is, e.g., the model as described before. Parameters of this filtration process model 4 dependent on the input process variables V1_M, V2_M.

With help of the filtration process model 4, output data are generated which are indicative for modeled process variables V3_P, V4_P. The modeled process variable V3_P may be, e.g., the concentration of the product and/or excipients in the first solution as a function of time. The modeled process variable V4_P may be, e.g., the pH value of the retentate and/or of the permeate (see also first picture of figure 2). Additionally or alternatively, the modeled process variable V4_P could be the absorption and/or the electrical conductivity of the permeate and/or retentate. The modeled process variables may, e.g., be displayed on a screen. A user may then study the modeled process parameters V3_P, V4_P.

Figure 4 shows a flowchart of a further exemplary embodiment of the method for monitoring a filtration process. The method is similar to the one described in connection with figure 3. However, in figure 4, second measurement data are additionally received which are indicative for a reference process variable V4_R measured with the measurement unit 21. The reference process variable V4_R may be, e.g., the pH value of the permeate at a certain time during the filtration process. In a further step of the method, the modeled process variable V4_P at that certain time may now be compared with the reference process variable V4_P. Based on this comparison, the filtration process model 4 may be adapted. For example, a parameter of the filtration process model, e.g. the assumption about the composition of the first solution at the beginning of the filtration process and/or of the second solution is adapted based on this comparison. In this way, the modeled process variable V4_P can be adapted to the reference process variable V4_R. In this way, the filtration process model 4 can be optimized during the filtration process in order to better describe the actual measured reference process variable(s).

Figure 5 shows yet another exemplary embodiment of the method for monitoring a filtration process. This exemplary embodiment is similar to the one of figure 4. However, in case of figure 5, a control signal is generated based on the output data of the model 4, particularly based on the modeled process variable V3_P. For example, the modeled process variable V3_P represents the concentration of the product or another solute in the first solution and/or in the permeate as a function of time. The modeled process variable V3_P may be compared to a desired concentration of the product or the solute during or at the end of the filtration process. This comparison may be done automatically, e.g. by the device 10. If the deviation between the modeled process variable V3_P and the desired value exceeds a certain threshold, a control signal may be generated in order to adjust the filtration process or in order to call for an adjustment of the filtration process. The generation of the control signal may also be done by the device 10. For example, the control signal may be used to control a controllable process parameter and/or an actuator of the filter system 100. By way of example, the controllable process parameter may be the time of the different filtration steps UF1, DF, UF2 and/or the flowrate with which the permeate is removed from the filter module 2 and/or the flowrate with which the second solution is mixed to the first solution during the diafiltration step DF. This may be done by controlling at least one of the pumps 26 and 36 and/or the valve 19. Also, the controlling of the pump(s) may be done automatically.

Reference number list

| | |
|---|---|
| 1 | first solution reservoir |
| 2 | filter module |
| 3 | second solution reservoir |
| 4 | filtration process model |
| 10 | device |
| 11, ..., 15 | measurement unit |
| 16 | pump/ actuator |
| 17 | first connection |
| 18 | second connection |
| 21, ..., 24 | measurement unit |
| 26 | pump |
| 31 | measurement unit |
| 36 | pump |
| 37 | third connection |
| 100 | filter system |
| V1_M, V2_M | input process variable |
| V3_P, V4_P | modeled process variable |
| V4_R | reference process variable |
| UF1 | first ultrafiltration step |
| UF2 | second ultrafiltration step |
| DF | diafiltration step |

**Claims**

1. Method for determining output data during a filtration process in which a first solution comprising at least one product in the form of a biopharmaceutical active ingredient as one solute is processed by a filter system (100) comprising a filtration module (2), the method comprising

   - receiving first measurement data which are indicative for at least one input process variable (V1_M, V2_M), wherein the at least one input process variable (V1_M, V2_M) is a process variable of the filtration process measurable during the filtration process with help of a measurement unit (11, 31),
   - determining output data by executing a filtration process model (4) and using the first measurement data, **characterized in that**

   - executing the filtration process model (4) comprises solving at least one physical equation describing the interaction between solutes of the first solution, the physical equation takes into account the mass balance, the electroneutrality condition and thermodynamic equilibrium of the filtration process,
   - at least one parameter of the filtration process model (4) is dependent on the at least one input process variable (V1_M, V2_M) derived from the first measurement data,
   - the output data is indicative for at least one modeled process variable (V3_P, V4_P) of the filtration process, wherein the at least one modeled process variable (V3_P) extractable from the output data is the concentration of a solute of the first solution and/or of a permeate of the filtration process.

2. Method according to claim 1,

   - wherein determining the output data is done in real-time.

3. Method according to any one of the preceding claims, wherein

   - the at least one physical equation is based on the Poisson-Boltzmann equation.

4. Method according to any one of the preceding claims, wherein

   - the filtration process model (4) is based on a cell model approach,
   - in the cell model approach, the first solution is reduced to a single Wigner-Seitz cell containing one molecule of a product of the first solution in its center,
   - the radius $R_{WS}$ of the Wigner-Seitz cell is defined by the concentration of the product $c_M$ in the first solution and is

$$R_{WS} = \left( \frac{3}{4\pi N_A c_M} \right)^{\frac{1}{3}}$$

   with $N_A$ being the Avogadro constant.

5. Method according to any one of the preceding claims, wherein

   - at least one further parameter of the filtration process model (4) is dependent on

     - the composition of the first solution and/or of a second solution mixed to the first solution during the filtration process, and/or
     - the charge and/or surface charge density of a solute in the first solution.

6. Method according to any one of the preceding claims, wherein

   - the at least one modeled process variable (V4_P) is a measurable process variable, and
   - the at least one modeled process variable (V4_P) is the pH value of the first solution and/or of a permeate of the filtration process.

7. Method according to any one of the preceding claims, further comprising

- receiving second measurement data which are indicative for at least one reference process variable (V4_R), wherein the at least one reference process variable (V4_R) is a process variable of the filtration process measurable during the filtration process with help of a measurement unit (21) and representing the same process variable as at least one modeled process variable (V4_P),

- comparing the at least one reference process variable (V4_R) with the at least one modeled process variable (V4_P),

- adjusting at least one parameter of the filtration process model (4) based on the comparison in order to adapt the at least one modeled process variable (V4_P) to the at least one reference process variable (V4_R).

8. Method according to any one of the preceding claims, further comprising

- generating a control signal based on the output data, wherein
- the control signal is configured for controlling at least one controllable process parameter of the filtration process and/or to call for controlling of the at least one controllable process parameter.

9. Method according to any one of the preceding claims, wherein

- at least one solute of the first solution is a biological molecule comprising at least one of: a protein, a peptide, a nucleic acid, a virus.

10. Method according to any one of the preceding claims, wherein the at least one input process variable (V1_M, V2_M) is at least one of:

- pH value of the first solution,
- pH value of a second solution mixed to the first solution during the filtration process,
- electrical conductivity of the first solution and/or the second solution,
- absorption and/or absorbance of the first solution and/or second solution,
- temperature of the first solution and/or second solution,
- flowrate of the first solution and/or of the second solution during mixing to the first solution,
- information whether the second solution is currently mixed to the first solution or not.

11. Device (10) comprising a processor configured to perform the method of any one of the preceding claims.

12. Computer program comprising instructions which, when the program is executed by a computer, cause the computer to carry out the method according to any one of the claims 1 to 10.

13. Computer-readable data carrier comprising instructions which, when executed by a computer, cause the computer to carry out the method according to any one of the claims 1 to 10.

14. Filter system (100) for a filtration process comprising:

- a device (10) according to claim 11,
- at least one measurement unit (11, 21, 31) for measuring a process variable (V1_M, V2_M, V4_R) of the filtration process,
- a first solution reservoir (1) for storing the first solution,
- a filter module (2) with an inlet fluidically coupled to the first solution reservoir (1) and an outlet for removing a permeate of the filtration process.

**Patentansprüche**

1. Verfahren zum Bestimmen von Ausgabedaten während eines Filtrationsprozesses, bei dem eine erste Lösung, umfassend mindestens ein Produkt in der Form eines biopharmazeutischen Wirkstoffs als einen gelösten Stoff, durch ein Filtersystem (100) verarbeitet wird, umfassend ein Filtrationsmodul (2), wobei das Verfahren umfasst

- Empfangen von ersten Messdaten, die für mindestens eine Eingangsprozessvariable (V1_M, V2_M) indikativ sind, wobei die mindestens eine Eingangsprozessvariable (V1_M, V2_M) eine während des Filtrationsprozesses mit Hilfe einer Messeinheit (11, 31) messbare Prozessvariable des Filtrationsprozesses ist,

- Bestimmen von Ausgabedaten durch Ausführen eines Filtrationsprozessmodells (4) und Verwenden der ersten Messdaten, **dadurch gekennzeichnet, dass**

- das Ausführen des Filtrationsprozessmodells (4) ein Lösen von mindestens einer physikalischen Gleichung umfasst, die die Wechselwirkung zwischen gelösten Stoffen der ersten Lösung beschreibt, wobei die physikalische Gleichung die Massenbilanz, die Elektroneutralitätsbedingung und das thermodynamische Gleichgewicht des Filtrationsprozesses berücksichtigt,
- mindestens ein Parameter des Filtrationsprozessmodells (4) abhängig ist von der mindestens einen Eingangsprozessvariable (V1_M, V2_M), die aus den ersten Messdaten abgeleitet wird,
- die Ausgabedaten indikativ sind für mindestens eine modellierte Prozessvariable (V3_P, V4_P) des Filtrationsprozesses, wobei die mindestens eine aus den Ausgabedaten extrahierbare modellierte Prozessvariable (V3_P) die Konzentration eines gelösten Stoffes der ersten Lösung und/oder eines Permeats des Filtrationsprozesses ist.

**2.** Verfahren nach Anspruch 1,

- wobei das Bestimmen der Ausgabedaten in Echtzeit erfolgt.

**3.** Verfahren nach einem der vorstehenden Ansprüche, wobei

- die mindestens eine physikalische Gleichung auf der Poisson-Boltzmann-Gleichung basiert.

**4.** Verfahren nach einem der vorstehenden Ansprüche, wobei

- das Filtrationsprozessmodell (4) auf einem Zellmodellansatz basiert,
- in dem Zellmodellansatz die erste Lösung auf eine einzige Wigner-Seitz-Zelle reduziert wird, die in ihrem Zentrum ein Molekül eines Produkts der ersten Lösung enthält,
- der Radius $R_{WS}$ der Wigner-Seitz-Zelle durch die Konzentration des Produkts $c_M$ in der ersten Lösung definiert wird, und

$$R_{WS} = \left(\frac{3}{4\pi N_A c_M}\right)^{\frac{1}{3}}$$

wobei $N_A$ die Avogadro-Konstante ist.

**5.** Verfahren nach einem der vorstehenden Ansprüche, wobei

- mindestens ein weiterer Parameter des Filtrationsprozessmodells (4) abhängig ist von

- der Zusammensetzung der ersten Lösung und/oder einer während des Filtrationsprozesses mit der ersten Lösung vermischten zweiten Lösung, und/oder
- der Ladung und/oder Oberflächenladungsdichte eines gelösten Stoffes in der ersten Lösung.

**6.** Verfahren nach einem der vorstehenden Ansprüche, wobei

- die mindestens eine modellierte Prozessvariable (V4_P) eine messbare Prozessvariable ist, und
- die mindestens eine modellierte Prozessvariable (V4_P) der pH-Wert der ersten Lösung und/oder eines Permeats des Filtrationsprozesses ist.

**7.** Verfahren nach einem der vorstehenden Ansprüche, weiter umfassend

- Empfangen von zweiten Messdaten, die für mindestens eine Referenzprozessvariable (V4_R) indikativ sind, wobei die mindestens eine Referenzprozessvariable (V4_R) eine während des Filtrationsprozesses mit Hilfe einer Messeinheit (21) messbare Prozessvariable des Filtrationsprozesses ist und dieselbe Prozessvariable als mindestens eine modellierte Prozessvariable (V4_P) darstellt,
- Vergleichen der mindestens einen Referenzprozessvariablen (V4_R) mit der mindestens einen modellierten Prozessvariablen (V4_P),

- Anpassen von mindestens einem Parameter des Filtrationsprozessmodells (4) basierend auf dem Vergleich, um die mindestens eine modellierte Prozessvariable (V4_P) an die mindestens eine Referenzprozessvariable (V4_R) anzupassen.

8. Verfahren nach einem der vorstehenden Ansprüche, weiter umfassend

- Erzeugen eines Steuersignals basierend auf den Ausgangsdaten, wobei
- das Steuersignal dazu konfiguriert ist, mindestens einen steuerbaren Prozessparameter des Filtrationsprozesses zu steuern und/oder eine Steuerung des mindestens einen steuerbaren Prozessparameters aufzurufen.

9. Verfahren nach einem der vorstehenden Ansprüche, wobei

- mindestens ein gelöster Stoff der ersten Lösung ein biologisches Molekül ist, umfassend mindestens eines von: einem Protein, einem Peptid, einer Nukleinsäure, einem Virus.

10. Verfahren nach einem der vorstehenden Ansprüche, wobei die mindestens eine Eingabeprozessvariable (V1_M, V2_M) mindestens eines ist von:

- einem pH-Wert der ersten Lösung,
- einem pH-Wert einer während des Filtrationsprozesses der ersten Lösung beigemischten zweiten Lösung,
- einer elektrischen Leitfähigkeit der ersten Lösung und/oder der zweiten Lösung,
- einer Absorption und/oder Extinktion der ersten Lösung und/oder der zweiten Lösung,
- einer Temperatur der ersten Lösung und/oder der zweiten Lösung,
- einer Durchflussrate der ersten Lösung und/oder der zweiten Lösung beim Mischen mit der ersten Lösung,
- einer Information, ob die zweite Lösung gerade mit der ersten Lösung vermischt wird oder nicht.

11. Vorrichtung (10), umfassend einen Prozessor, der zum Ausführen des Verfahrens nach einem der vorstehenden Ansprüche konfiguriert ist.

12. Computerprogramm, umfassend Anweisungen, die, wenn das Programm von einem Computer ausgeführt wird, den Computer veranlassen, das Verfahren nach einem der Ansprüche 1 bis 10 auszuführen.

13. Computerlesbarer Datenträger, umfassend Anweisungen, die, wenn sie von einem Computer ausgeführt werden, den Computer veranlassen, das Verfahren nach einem der Ansprüche 1 bis 10 ausführt.

14. Filtersystem (100) für einen Filtrationsprozess, umfassend:

- eine Vorrichtung (10) nach Anspruch 11,
- mindestens eine Messeinheit (11, 21, 31) zum Messen einer Prozessvariablen (V1_M, V2_M, V4_R) des Filtrationsprozesses,
- ein erstes Lösungsreservoir (1) zum Aufbewahren der ersten Lösung,
- ein Filtermodul (2) mit einem Einlass, der fluidisch mit dem ersten Lösungsreservoir (1) gekoppelt ist, und einem Auslass zum Entfernen eines Permeats des Filtrationsprozesses.

**Revendications**

1. Procédé de détermination de données de sortie pendant un processus de filtration dans lequel une première solution comprenant au moins un produit sous la forme d'un principe actif biopharmaceutique en tant que soluté est traitée par un système de filtre (100) comprenant un module de filtration (2), le procédé comprenant

- la réception de premières données de mesure qui sont indicatives d'au moins une variable (V1_M, V2_M) de processus d'entrée, dans lequel l'au moins une variable (V1_M, V2_M) de processus d'entrée est une variable de processus du processus de filtration mesurable pendant le processus de filtration à l'aide d'une unité (11, 31) de mesure,
- la détermination de données de sortie en exécutant un modèle (4) de processus de filtration et en utilisant les premières données de mesure, **caractérisé en ce que**

- l'exécution du modèle (4) de processus de filtration comprend la résolution d'au moins une équation physique décrivant l'interaction entre des solutés de la première solution, l'équation physique prenant en compte le bilan massique, la condition d'électroneutralité et l'équilibre thermodynamique du processus de filtration,
- au moins un paramètre du modèle (4) de processus de filtration dépend de l'au moins une variable (V1_M, V2_M) de processus d'entrée dérivée des premières données de mesure,
- les données de sortie sont indicatives d'au moins une variable (V3_P, V4_P) de processus modélisée du processus de filtration, dans lequel l'au moins une variable (V3_P) de processus modélisée extractible à partir des données de sortie est la concentration d'un soluté de la première solution et/ou d'un perméat du processus de filtration.

2. Procédé selon la revendication 1,

- dans lequel la détermination des données de sortie est effectuée en temps réel.

3. Procédé selon l'une quelconque des revendications précédentes, dans lequel

- l'au moins une équation physique est basée sur l'équation de Poisson-Boltzmann.

4. Procédé selon l'une quelconque des revendications précédentes, dans lequel

- le modèle (4) de processus de filtration est basé sur une approche par modèle cellulaire,
- dans l'approche par modèle cellulaire, la première solution est réduite à une seule maille de Wigner-Seitz contenant une molécule d'un produit de la première solution en son centre,
- le rayon $R_{WS}$ de la maille de Wigner-Seitz est défini par la concentration du produit $c_M$ dans la première solution et est

$$R_{WS} = \left( \frac{3}{4\pi N_A c_M} \right)^{\frac{1}{3}}$$

$N_A$ étant la constante d'Avogadro.

5. Procédé selon l'une quelconque des revendications précédentes, dans lequel

- au moins un autre paramètre du modèle (4) de processus de filtration dépend de

- la composition de la première solution et/ou d'une deuxième solution mélangée à la première solution pendant le processus de filtration, et/ou
- la densité de charge et/ou de charge en surface d'un soluté dans la première solution.

6. Procédé selon l'une quelconque des revendications précédentes, dans lequel

- l'au moins une variable (V4_P) de processus modélisée est une variable de processus mesurable, et
- l'au moins une variable (V4_P) de processus modélisée est la valeur de pH de la première solution et/ou d'un perméat du processus de filtration.

7. Procédé selon l'une quelconque des revendications précédentes, comprenant en outre

- la réception de deuxièmes données de mesure qui sont indicatives d'au moins une variable (V4_R) de processus de référence, dans lequel l'au moins une variable (V4_R) de processus de référence est une variable de processus du processus de filtration mesurable pendant le processus de filtration à l'aide d'une unité (21) de mesure et représentant la même variable de processus qu'au moins une variable (V4_P) de processus modélisée,
- la comparaison de l'au moins une variable (V4_R) de processus de référence à l'au moins une variable (V4_P) de processus modélisée,
- l'ajustement d'au moins un paramètre du modèle (4) de processus de filtration sur la base de la comparaison afin d'adapter l'au moins une variable (V4_P) de processus modélisée à l'au moins une variable (V4_R) de processus de référence.

8. Procédé selon l'une quelconque des revendications précédentes, comprenant en outre

- la génération d'un signal de commande sur la base des données de sortie, dans lequel
- le signal de commande est configuré pour commander au moins un paramètre de processus pouvant être commandé du processus de filtration et/ou pour exiger la commande de l'au moins un paramètre de processus pouvant être commandé.

9. Procédé selon l'une quelconque des revendications précédentes, dans lequel

- au moins un soluté de la première solution est une molécule biologique comprenant au moins un élément parmi : une protéine, un peptide, un acide nucléique, un virus.

10. Procédé selon l'une quelconque des revendications précédentes, dans lequel l'au moins une variable (V1_M, V2_M) de processus d'entrée est au moins un élément parmi :

- une valeur de pH de la première solution,
- une valeur de pH d'une deuxième solution mélangée à la première solution pendant le processus de filtration,
- une conductivité électrique de la première solution et/ou de la deuxième solution,
- une absorption et/ou une absorbance de la première solution et/ou de la deuxième solution,
- une température de la première solution et/ou de la deuxième solution,
- un débit de la première solution et/ou de la deuxième solution pendant le mélange à la première solution,
- des informations indiquant si la deuxième solution est actuellement mélangée à la première solution ou non.

11. Dispositif (10) comprenant un processeur configuré pour réaliser le procédé selon l'une quelconque des revendications précédentes.

12. Programme informatique comprenant des instructions qui, lorsque le programme est exécuté par un ordinateur, amènent l'ordinateur à mettre en œuvre le procédé selon l'une quelconque des revendications 1 à 10.

13. Support de données lisible par ordinateur comprenant des instructions qui, lorsqu'elles sont exécutées par un ordinateur, amènent l'ordinateur à mettre en œuvre le procédé selon l'une quelconque des revendications 1 à 10.

14. Système de filtre (100) pour un processus de filtration comprenant :

- un dispositif (10) selon la revendication 11,
- au moins une unité (11, 21, 31) de mesure pour mesurer une variable (V1_M, V2_M, V4_R) de processus du processus de filtration,
- un premier réservoir (1) de solution pour stocker la première solution,
- un module de filtre (2) avec une entrée en communication fluidique avec le premier réservoir (1) de solution et une sortie pour l'élimination d'un perméat du processus de filtration.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008017576 A1